# EUROPEAN PATENT APPLICATION

(11) **EP 4 066 630 A1**
(43) Date of publication of application: **05.10.2022**
(21) Application number: 22165264.7
(22) Date of filing: 29.03.2022
(51) Int. Cl.: A01K 1/01

(54) **LITTER BOX LINER**

(30) Priority: 30.03.2021 GB 202104523
(71) Applicant: Hebe Studio Limited, Banbury, Oxfordshire OX16 5HX (GB)
(72) Inventor: TUTHILL, James, Headington, OX3 9JJ (GB); PAUL, Johannes, London, WC1H 8EU (GB); NICHOLLS, Simon, Daventry, NN11 6XS (GB); WINDHAM, William, Banbury, OX17 1SP (GB)
(74) Representative: Milhench, Mark Lorne

(57) **Abstract**

A litter box liner 13 comprising a base 21 and at least one sidewall 15, peripheral regions of the base and the at least one sidewall being coupled to one another so as to form an open-ended bag-like structure that defines a void for receiving litter, wherein the base 21 and the at least one sidewall 15 are each of a fluid-impervious material and couplings 27 between the peripheral regions of the base 21 and the at least one sidewall 15 are continuous and fluid impermeable.

## Description

### Field

This disclosure relates to litter box liners, particularly but not exclusively to litter box liners for cat litter boxes. Although the following disclosure refers in detail to the management of waste from domestic felines, it will be appreciated and should be borne in mind that this is merely one illustrative application of the teachings disclosed herein and the litter box liner may be used with litter boxes for other types of animal.

### Background

Domestic cats tend to be categorised as being "indoor" or "outdoor" cats. Outdoor cats, as the name suggests, are typically able to go outdoors and are usually encouraged to defecate and urinate outside. Indoor cats, on the other hand, tend to spend most if not all of their time indoors and as a consequence usually urinate and defecate inside.

To manage the waste from such cats it has previously been proposed to provide a relatively shallow "litter tray" which comprises a - typically plastics - base with relatively small raised sidewalls (whose height is a small fraction of the width of the base of the tray) in which an amount of absorbent litter is provided. An illustrative example of such a tray is the "42cm Cat Litter Tray" sold by Whitefurze Limited, Burnsall Road, Canley, Coventry CV5 6BT, United Kingdom (see: http://www.whitefurze.net/42-cm-cat-litter-tray.html). The litter is intended to soak up liquid waste from the animal and is typically formulated to clump together so that used litter and any solid waste can readily be lifted from the tray for disposal.

Whilst such trays function adequately, as a cat's natural instinct is to rake through the litter after use to cover their waste, litter can often be ejected from the relatively shallow tray. It is also the case that as many cats prefer to defecate and urinate in quiet and secluded locations, an open-sided litter tray may make such animals feel uncomfortable. Another issue associated with such trays is that the base, as it is repeatedly scratched by the cat following defecation and urination, can become scratched and scored, whereupon it can be difficult to properly clean the tray.

From the animal owner's perspective, it is also the case that litter trays of this type can often be something of an eyesore, and to that end it would be preferable if a more aesthetically pleasing arrangement could be provided.

To address at least some of these issues it has previously been proposed to provide another type of litter tray that is typically referred to as a "litter box". These litter boxes have much higher sidewalls than the abovementioned litter tray (typically, the sidewalls are roughly as high as the base is wide), which helps contain litter in the box and provide a more secluded environment for the animal. Typically, this type of litter box is provided with an access port, for example in one of the aforementioned sidewalls. Such litter boxes may also be provided with a lid and the access port may be provided in that lid. Alternatively, a lid may be omitted and the access port defined by the upstanding sidewalls of the box.

Illustrative examples of such litter boxes are the so called "Flip Litter Box" and the "Modkat Litter Box" all of which are manufactured by ModProducts, LLC and can be viewed at http://modkat.eu. These litter boxes provide a more secluded space for the animal, and are significantly more aesthetically pleasing.

To enhance the cleanliness of such litter boxes, for example by reducing the extent to which the base of the box can be scratched and scored, it has previously been proposed to provide a liner that can be inserted into the box, and in which an amount of absorbent litter can be provided. These liners are sized to fit within the box, and the sidewalls of the liner extend upwardly from the base in use to define a void in which litter is placed for the animal to use. These previously proposed liners are constructed from panels of a waterproof material (such as tarpaulin, canvas or woven/non-woven plastics material, such as polypropylene) that are coupled together at their peripheries to form an open-ended bag-like structure with a base, and sidewalls upstanding from and coupled to respective peripheries of the base.

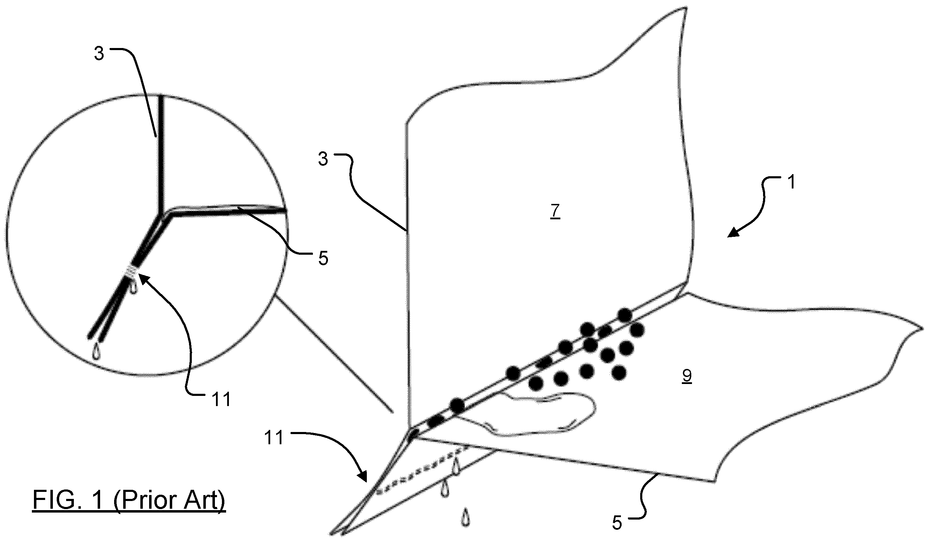

In one such previously proposed liner 1, shown schematically in Fig. 1, adjacent panels 3, 5 of the liner are sewn together with like faces (in this instance inside faces 7, 9 of each panel) abutting and a problem with this arrangement is that soiled litter and liquid waste can seep between the stitches 11 of the sewn-together panels and leak into the litter box. This problem is exacerbated over time as the stitches tend to loosen thereby making it ever easier - as the liner ages - for litter and/or liquid waste to seep between the sewn-together panels and leak into the litter box.

Aspects of the litter box liner disclosed herein have been developed with the foregoing in mind.

### Summary

In one presently preferred arrangement, there is provided a litter box liner comprising a base and at least one sidewall, peripheral regions of the base and the at least one sidewall being coupled to one another so as to form an open-ended bag-like structure that defines a void for receiving litter, wherein the base and said at least one sidewall are of a fluid-impervious material and couplings between the peripheral regions of the base and said at least one sidewall are continuous and fluid impermeable.

In one implementation the at least one sidewall of the liner is configured so that it extends upwardly, in use, from the base. In another envisaged implementation, the at least one sidewall includes one or more retainers that are capable of interacting with a sidewall of a litter box in which the liner is received so that the at least one sidewall of the liner is generally upstanding from the base in use.

In one envisaged arrangement the retainer may be operable to cause the liner to frictionally engage the sidewall of the litter box to retain the at least one sidewall of the liner in a position where said at least one sidewall is generally upstanding from the base. The retainer may be resiliently deformable for facilitating insertion or removal of the litter box liner into or from the litter box. The retainer may comprise a sprung steel band.

The retainer may be configured to engage with a complementary feature provided on a litter box sidewall. The retainer may comprise a plurality of eyelets configured to engage with hooks or pegs on the litter box sidewall. The liner may be provided with a plurality of hooks for engaging the sidewall of the box.

The litter box liner may further comprise a pocket provided on an external wall of the liner.

In one implementation, the base and said at least one sidewall may each include an inside face and an outside face, and the base and said at least one sidewall may be coupled together so that a peripheral region of an inside face of one of said base and said at least one sidewall abuts a peripheral region of an outside face of the other of said base and said at least one sidewall.

The liner may be of a plastics material, such as polyvinylchloride, woven polypropylene or non-woven polypropylene, or rubber. Peripheral regions of the base and the at least one sidewall may be bonded or fused to one another to couple the at least one sidewall to the base.

Another implementation provides a litter box liner that comprises a plurality of fluid impermeable panels coupled together to form an open-ended bag-like structure having a base and at least one sidewall extending from the base, wherein each said panel includes an inside face and an outside face, adjacent panels are arranged so that a peripheral region of an inside face of one said panel abuts a peripheral region of an outside face of another said panel, and couplings between the peripheral regions of adjacent panels are continuous and fluid impermeable.

Another implementation provides a litter box liner comprising base panel means and sidewall panel means, said base panel means and said sidewall panel means being of fluid impermeable material and being coupled to one another to form an open-ended bag-like structure which defines an internal void for the receipt of litter, wherein respective peripheral regions of said base panel means and said sidewall panel means are overlapped and sealed to one another to form a continuous fluid impermeable coupling between said base panel means and said sidewall panel means; said litter box liner further comprising pocket means for receiving a litter scoop, said pocket means being coupled to an external face of said sidewall panel means so that said pocket means lies between said sidewall panel means and an internal sidewall of a litter box when said litter box liner is received in said litter box.

### Brief Description of the Drawings

Various aspects of the teachings of the present invention, and arrangements embodying those teachings, will hereafter be described by way of illustrative example with reference to the accompanying drawings, in which:
Fig. 1 is a schematic representation of part of a previously proposed litter box liner;
Fig. 2 is a schematic representation of part of a litter box liner according to the present disclosure;
Fig. 3 is an enlarged cross-sectional view along the line A-A of Fig. 2;
Fig. 4 is a schematic isometric view of a litter box liner according to the present disclosure;
Fig. 5 is an enlarged cross-sectional view along the line B-B of Fig. 4;
Fig. 6 is a schematic isometric view of a litter box liner according to another aspect of the present disclosure; and
Fig. 7 is a schematic isometric view of a litter box liner according to another aspect of the present disclosure.

### Detailed Description

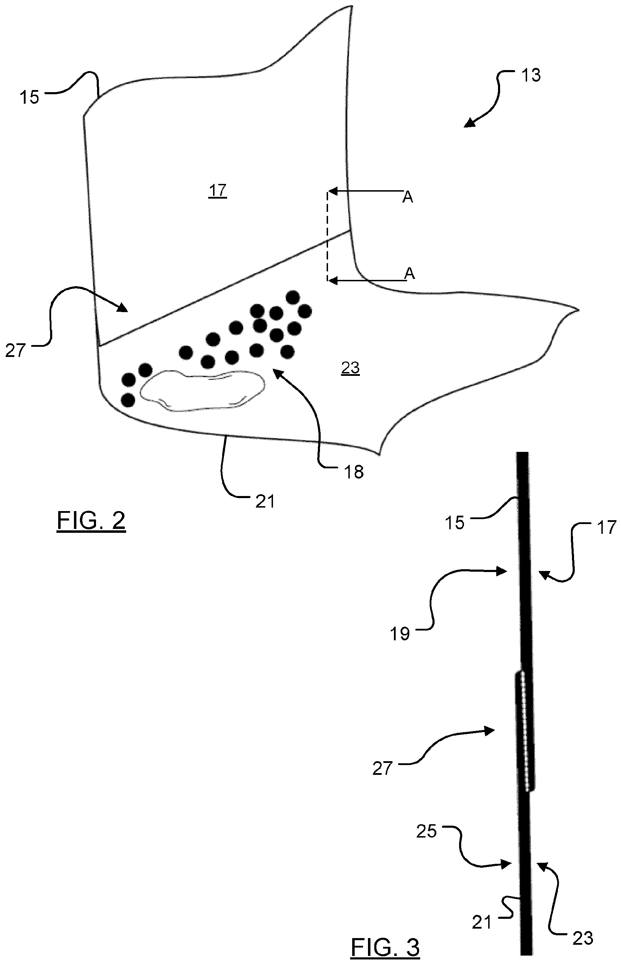

Referring now to Figs 2 and 3 of the drawings, there is depicted part of a litter box liner 13 according to the present disclosure. In Fig. 2, a base 21 of the liner 13 is secured to a sidewall 15 in such a way that litter and liquid waste 18 is less likely to seep between the sidewall 15 and base 21 and into a litter box (not shown) in which the liner is installed.

The sidewall 15 has an inner face 17 and an outer face 19. The outer face 19 is the face of the liner that faces the inside of the sidewall of the litter box when the liner is installed in the litter box, and the inner face 17 is the face of the liner that partly lines the void in which litter is provided in use. The base 21 also has an inner face 23 and an outer face 25. The outer face 25 of the base 21 faces the inside of the base of the litter box when the liner is installed in the litter box, and the inner face 23 is the face of the liner on which the litter lies in use.

As shown in Fig. 3 a peripheral region of the sidewall 15 is coupled to a peripheral region of the base 21. The sidewall 15 and base 21 are coupled to one another in such a way that an overlap 27 is created where a peripheral region of the outer face 19 of the sidewall 15 abuts against a peripheral region of the inner face 23 of the base 21. The coupling between the sidewall and base is continuous, and hence fluid-impervious. In an alternative arrangement, an overlap may be created where a peripheral region of the inner face 17 of the sidewall 15 abuts against a peripheral region of the outer face 25 of the base 21.

In one envisaged implementation, the base may comprise a single panel and the sidewall may also be a single panel that is joined to itself at either end to form a cylinder, before being joined in the vicinity of a periphery to the base. In other implementation a plurality of sidewalls may be provided. For example, four sidewall panels could be provided, one sidewall being coupled in the vicinity of each periphery of the base. Other arrangements will be apparent to persons of ordinary skill in the art, such as a first sidewall that is coupled to one periphery of the base, and a second sidewall that is coupled to the remaining three periphery's of the base.

The base is of a fluid impermeable material. The at least one sidewall may be entirely of a fluid impermeable material, or may be a mix of fluid impermeable and fluid permeable materials (the fluid impermeable material being provided in that region of the at least one sidewall that is adjacent the base when the at least one sidewall and base are coupled together). In an envisaged implementation, the base and at least one sidewall are of a plastics material, for example of polyvinylchloride (PVC) or woven/non-woven polypropylene. Other suitable materials will immediately be apparent to persons of skill in the art.

The at least one sidewall can be coupled to the base in any of a number of different ways, dependent on material. In one envisaged implementation, the at least one sidewall may be bonded, for example adhered, to the base. Alternatively, or additionally, the at least one sidewall may be fused - for example welded - to the base.

As will be appreciated, for the liner to define a void for the receipt of litter, the at least one sidewall should extend upwardly (at least in use) from the base. In one implementation this can be achieved by making the sidewall of the liner stiffer than the base (for example, by making the sidewall of a stiffer material than the base, or simply by making the liner thicker than the base so that it is self-supporting). In another implementation, a region of the at least one sidewall remote from the base is provided with one or more retainers that are capable of interacting with a sidewall of a litter box in which the liner is received to retain the at least one sidewall of the liner in a position where the at least one sidewall is generally upstanding from the base.

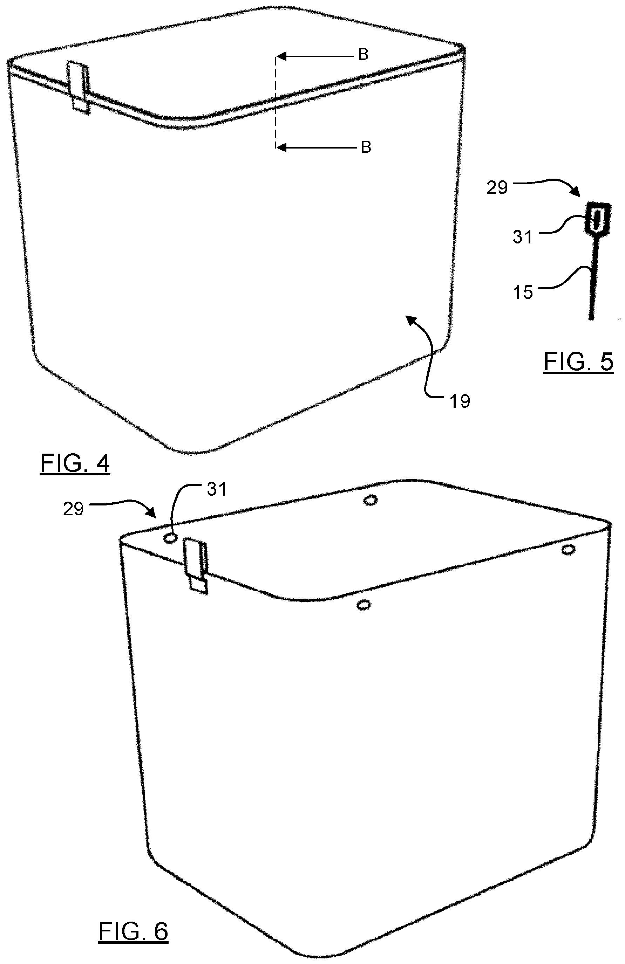

Referring now to Figs. 4 and 5, in one implementation the retainer 29 may comprise a sprung steel band 31 encapsulated within, or otherwise coupled to, a peripheral region of the at least one sidewall 15 that is remote from the base. in this arrangement, the sprung steel band is resiliently inwardly deformed as the liner is installed in a litter box, and once installed the band springs outwardly to abut against an inner wall of the litter box to retain the at least one sidewall in an upright position, relative to the base, by virtue of a frictional force exerted on the internal face of the litter box sidewall.

In another arrangement, the internal face of the litter box sidewall may be provided with a peripheral groove that the sprung steel band region of the sidewall 15 can locate in when the liner is installed in a litter box.

As shown in Fig. 6, in another envisaged arrangement the retainer 29 may comprise a plurality of eyelets 33 that can be engaged with pegs or hooks (not shown) carried by the sidewall of the litter box. In another envisaged implementation that is not depicted in the drawings, the liner sidewall may be provided with a plurality of hooks that can be hooked over the sidewall of the litter box to keep the sidewall of the liner upright relative to the base.

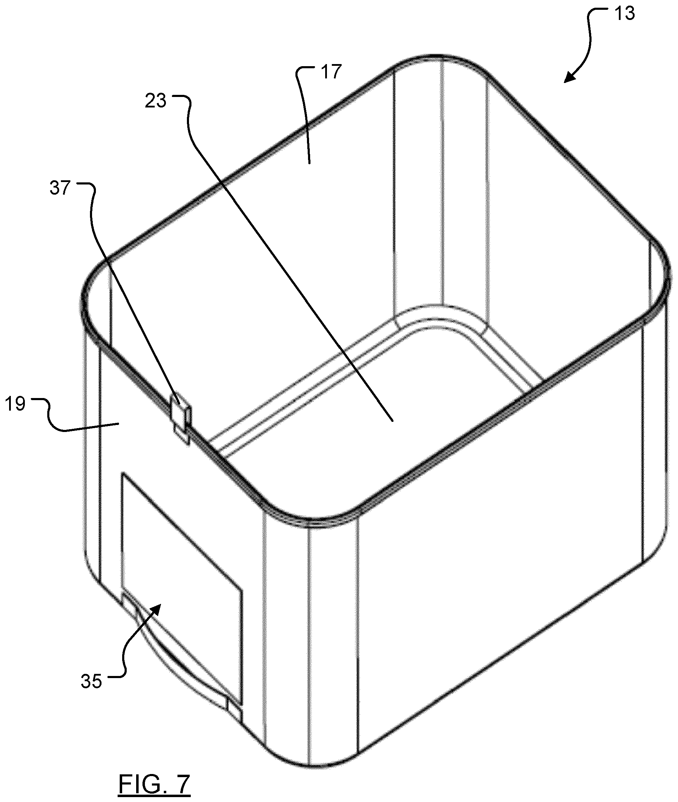

Referring now to Fig. 7 of the drawings, it is envisaged for a pocket 35 to be coupled to the outer surface 19 of the at least one sidewall. In a preferred implementation, the pocket 35 is sized to accommodate a litter scoop. In this arrangement, the pocket (and anything in it) will be hidden out of sight between the liner and the litter box when the liner is installed in the box. A user can pull on a tab 37 and move part of the liner sidewall away from the box sidewall (not shown) to gain access to the pocket 35. This arrangement is advantageous as it allows a soiled scoop to be kept out of sight, and in a position where inadvertent contact with the scoop is unlikely.

It will be appreciated from the foregoing that the litter box liner disclosed herein provides an effective arrangement for addressing at least some of the disadvantages associated with previously proposed litter box liners.

It will also be appreciated that whilst various aspects and embodiments of a litter box liner have heretofore been described, the scope of the present invention is not limited to the particular arrangements set out herein and instead extends to encompass all arrangements, and modifications and alterations thereto, which fall within the scope of the invention, for example as illustrated by the appended claims.

It should also be noted that whilst the accompanying claims set out particular combinations of features described herein, the scope of the present invention is not limited to the particular combinations hereafter claimed, but instead extends to encompass any combination of features herein disclosed.

## Claims

1. A litter box liner (13) comprising a base (21) and at least one sidewall (15), said base and said at least one sidewall each comprising a peripheral region, said peripheral regions of the base (21) and the at least one sidewall (15) being coupled to one another so as to form an open-ended bag-like structure that defines a void for receiving litter, wherein the base and said at least one sidewall are each of a fluid-impervious material and said at least one coupling between the peripheral regions of the base and said at least one sidewall is continuous and fluid impermeable.

2. A litter box liner according to Claim 1, wherein the at least one sidewall (15) of the liner (13) is configured so that said at least one sidewall (15) is self-supporting and extends upwardly, in use, from the base (21).

3. A litter box liner according to Claim 1 or 2, wherein the at least one sidewall (15) includes one or more retainers (29, 33) that are capable of interacting with a sidewall of a litter box in which the liner (13) can be received to retain the at least one sidewall (15) of the liner in a position where said at least one sidewall (15) is generally upstanding from the base (21).

4. A litter box liner according to Claim 3, wherein said retainer (29) is operable to cause the liner to frictionally engage the sidewall of the litter box to retain the at least one sidewall of the liner in a position where said at least one sidewall is generally upstanding from the base.

5. A litter box liner according to Claim 4, wherein the retainer (29) is resiliently deformable for insertion or removal of the litter box liner into or from the litter box.

6. A litter box liner according to Claim 5, wherein the retainer comprises a sprung steel band (29).

7. A litter box liner according to Claim 3, wherein the retainer (33) is configured to engage with a complementary feature provided on a litter box sidewall.

8. A litter box liner according to Claim 7, wherein the retainer comprises a plurality of eyelets (33) configured to engage with hooks or pegs on the litter box sidewall.

9. A litter box liner according to any preceding claim, further comprising a pocket (35) provided on an external wall (19) of the liner (13).

10. A litter box liner according to Claim 9, wherein the pocket (35) is coupled to an outside surface (19) of said at least one sidewall (15) so that said pocket lies, in use, between the outside surface (19) of said at least one sidewall (15) and an internal surface of a sidewall of a litter box in which said litter box liner (13) is received.

11. A litter box liner according to any preceding claim, wherein said base (21) and said at least one sidewall (15) each include an inside face and an outside face, the base and said at least one sidewall being coupled together so that either a peripheral region of an inside face (23) of said base (21) abuts a peripheral region of an outside face (19) of said at least one sidewall (15) or a peripheral region of an outside face (25) of said base (21) abuts a peripheral region of an inside face (17) of said at least one sidewall (15).

12. A litter box liner according to Claim 13, wherein said peripheral regions of said base (21) and said at least one sidewall (15) provide an overlap (27).

13. A litter box liner according to any preceding claim, wherein the litter box liner (13) is of a plastics material, for example polyvinylchloride, woven polypropylene or non-woven polypropylene.

14. A litter box liner according to Claim 13, wherein peripheral regions of the base and the at least one sidewall are bonded or fused to one another to couple the at least one sidewall to the base.

15. A litter box liner according to any preceding claim, wherein said at least one sidewall (15) comprises one cylindrical sidewall.
